# EUROPÄISCHE PATENTSCHRIFT

(11) **EP 2 485 922 B1**
(45) Veröffentlichungstag und Bekanntmachung des Hinweises auf die Patenterteilung: **06.11.2013**
(21) Anmeldenummer: 10768397.1
(22) Anmeldetag: 22.09.2010
(51) Int. Cl.: B60R 21/207

(54) **POLSTERELEMENT**
CUSHIONING ELEMENT
ÉLÉMENT DE REMBOURRAGE

(30) Priorität: 07.10.2009 DE 102009048593; 27.05.2010 DE 102010021689
(43) Veröffentlichungstag der Anmeldung: 15.08.2012
(73) Patentinhaber: Johnson Controls GmbH, 51399 Burscheid (DE)
(72) Erfinder: MORILHAT, Philippe, F-67200 Strasbourg (FR); QUIRIN, Paul, F-67400 Illkirch (FR)
(74) Vertreter: Schwöbel, Thilo K.
(86) Internationale Anmeldenummer: PCT/EP2010/005792
(87) Internationale Veröffentlichungsnummer: WO 2011/042119

(56) Entgegenhaltungen:
- DE-A1- 10 260 988
- DE-A1-102005 005 886
- DE-A1-102005 057 443
- DE-A1-102008 049 502
- DE-B3- 10 254 377

## Beschreibung

Die vorliegende Erfindung betrifft ein Polsterelement, insbesondere für einen Fahrzeugsitz. Spezieller betrifft die Erfindung eine Anordnung und ein Verfahren zur Herstellung eines Polsterelements, wobei das Polsterelement eine aufblasbare Insassenschutzvorrichtung aufweist.

### Stand der Technik

Bekannt sind Verfahren zur Herstellung gepolsterter Polstergegenstände, die am Ort gegossene oder eingeschäumte Bezüge verwenden.

Die DE 10 2005 057443 A1 offenbart ein Polsterelement, welches dem Oberbegriff des Anspruchs 1 entspricht.

Eine Aufgabe der vorliegenden Erfindung ist die Bereitstellung eines Polsterelements bzw. eines Verfahrens zur Herstellung eines Polsterelements, wobei ein Bezug des Polsterelements am Ort gegossen vorgesehen ist bzw. ein eingeschäumter Bezug verwendet wird und wobei eine aufblasbare Insassenschutzvorrichtung mit dem Polsterelement derart zusammenwirkt, dass der Bezug bei einer Aktivierung der aufblasbaren Insassenschutzvorrichtung geöffnet wird. Die Einbringung des Füllmaterials in den Bezug erfolgt gemäß der vorliegenden Erfindung in flüssigem Zustand, d.h. gemäß der sogenannten Pour-in-Place-Technik.

Die Aufgabe wird gelöst durch ein Polsterelement gemäß Anspruch 1.

Es hierdurch erfindungsgemäß vorteilhaft möglich, dass eine gezielte Öffnung des Bezugs und damit eine besonders sichere Schutzwirkung durch die Insassenschutzvorrichtung möglich ist.

Die Aufgabe wird ferner gelöst durch ein Polsterelement mit einem Bezug und mit wenigstens einem zusätzlich zum Bezug eingeschäumten textilen Flächengebilde derart, dass die Öffnung des Bezugs bei Aktivierung der aufblasbaren Insassenschutzvorrichtung zuverlässig und reproduzierbar erfolgt.

Erfindungsgemäß ist, dass die Außenseite des Polsterelements eine A-Seite (Sichtseite) und eine B-Seite (Nichtsichtseite) aufweist, wobei bei Aktivierung der aufblasbaren Insassenschutzvorrichtung die Öffnung des Bezugs von der B-Seite des Polsterelements aus erfolgt. Hierdurch ist es erfindungsgemäß in einfacher Weise möglich, dass das Polsterelement formschön aussieht und dennoch für den Fall eines Unfalls eine große Schutzwirkung durch die Auslösung der aufblasbaren Insassenschutzvorrichtung erzielt wird.

Erfindungsgemäß ist ferner vorgesehen, dass das wenigstens eine textile Flächengebilde an einer Verbindungsstelle mit dem Bezug verbunden ist, wobei die Verbindungsstelle der Innenseite des Bezugs an der A-Seite des Polsterelements entspricht. Alternativ oder kumulativ hierzu ist es erfindungsgemäß bevorzugt, dass das wenigstens eine textile Flächengebilde an einer Verbindungsstelle mit dem Bezug verbunden ist, wobei die Verbindungsstelle der Innenseite des Bezugs an der B-Seite des Polsterelements entspricht. Hierdurch kann die Anbringung des wenigstens einen textilen Flächengebildes an einer beliebigen Seite des Polsterelements vorgesehen werden, so dass in vorteilhafter Weise verschiedenste Gestaltungen möglich sind.

Erfindungsgemäß ist es ferner bevorzugt, dass das wenigstens eine textile Flächengebilde auf der B-Seite des Polsterelements sich durch den Bezug hindurch erstreckt. Hierdurch ist es in vorteilhafter Weise möglich, dass das textile Flächengebilde mittels eines oder auch mittels zweier aus dem Bezug heraushängender Enden entweder direkt mit der aufblasbaren Insassenschutzvorrichtung verbunden ist oder aber an einem mit der aufblasbaren Insassenschutzvorrichtung verbundenen Element, etwa einem Schussrahmen oder dergleichen, angebracht ist.

Die vorliegende Erfindung bezieht sich ferner auf ein System aus einem solchen Polsterelement und einer aufblasbaren Insassenschutzvorrichtung, wobei das Polsterelement einen Bezug, einen Füllmaterial und wenigstens ein zusätzlich zum Bezug eingeschäumtes textiles Flächengebilde aufweist, wobei bei Aktivierung der aufblasbaren Insassenschutzvorrichtung zuverlässig und reproduzierbar eine Öffnung des Bezugs erfolgt, wobei das wenigstens eine textile Flächengebilde vorgesehen ist, bei Aktivierung der aufblasbaren Insassenschutzvorrichtung die Öffnung des Bezugs zu beeinflussen.

Mittels eines solchen Systems ist es erfindungsgemäß in vorteilhafter Weise möglich, dass das Polsterelement in formschöner Weise im Kraftfahrzeug befestigt wird und dennoch ein wirksamer Schutz der Insassen durch die aufblasbare Insassenschutzvorrichtung gewährleistet ist.

### Auführungsbeispiel

Die Erfindung wird nachstehend anhand zeichnerisch dargestellter Ausführungsbeispiele näher erläutert, aus welchen weitere Vorteile und Merkmale hervorgehen.

Es zeigt:
**Figur 1** eine schematische Schnittansicht eines Werkzeugs zur Herstellung eines Polsterelements gemäß dem erfindungsgemäßen Verfahren und ein Polsterelement, bei dem ein Bezug mit einem Schaumstoffmaterial versehen bzw. gefüllt wird und wobei das Schaumstoffmaterial in den Bezug, d.h. vor Ort, gegossen wird,
**Figur 2** eine schematische Querschnittansicht quer zur Haupterstreckungsrichtung des Polsterelements gemäß einer ersten Ausführungsform der vorliegenden Erfindung, und
**Figur 3** eine schematische Querschnittansicht quer zur Haupterstreckungsrichtung des Polsterelements gemäß einer zweiten Ausführungsform der vorliegenden Erfindung.

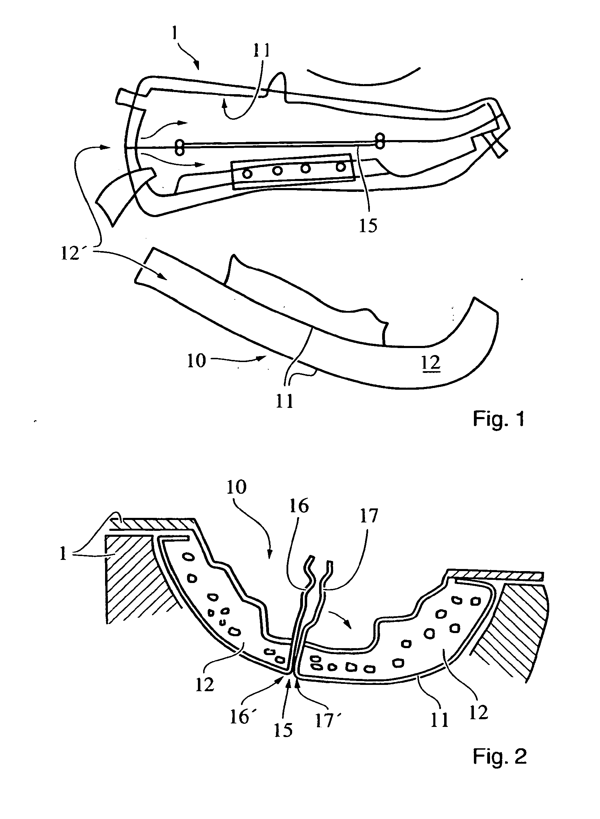

In Figur 1 ist schematisch ein Polsterelement 10 (unterer Teil der Figur 1) und ein Werkzeug 1 (oberer Teil der Figur 1) dargestellt, wobei das Werkzeug 1 zur Herstellung des Polsterelements 10 dient. Es wird hierbei ein Bezug 11 des Polsterelements 10 in das Werkzeug 1 eingelegt und mit einem Füllmaterial 12, insbesondere ein Schaumstoffmaterial 12, zumindest teilweise gefüllt. Es ergibt sich hierdurch nicht die Notwendigkeit, den Bezug 11 über ein vorgeformtes Schaumstoffelement zu überziehen, sondern das Füllmaterial 12 bzw. das Schaumstoffmaterial 12 wird vor Ort in den Bezug 11 eingebracht. Mittels Pfeilen 12' sind die Einfüllrichtungen des Füllmaterials 12 schematisch dargestellt.

Das Polsterelement 10 weist gemäß der vorliegenden Erfindung eine Sollbruchstelle 15, insbesondere eine Naht 15, auf, die geöffnet wird, wenn eine aufblasbare Insassenschutzvorrichtung aktiviert wird. Eine solche aufblasbare Insassenschutzvorrichtung wird im Folgenden auch als Airbag bezeichnet. Der Airbag weist in bekannter Weise ein Modul auf, das einen Luftsack aufweist, der zum Schutz von Fahrzeuginsassen aus der Sollbruchstelle 15 des Polsterelements 10 austritt, wenn der Airbag aktiviert wird.

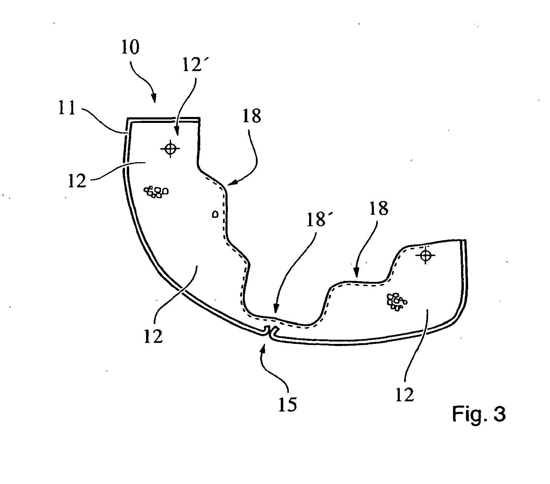

In den Figuren 2 und 3 sind jeweils schematische Querschnittansichten quer zur Haupterstreckungsrichtung des Polsterelements 10 dargestellt, wobei in Figur 2 die Querschnittdarstellung auch das Werkzeug 1 umfasst, während in Figur 3 lediglich das Polsterelement 10 dargestellt ist. Hierbei stellt Figur 2 eine erste Ausführungsform der vorliegenden Erfindung und Figur 3 eine zweite Ausführungsform der vorliegenden Erfindung dar.

Gemäß der in Figur 2 dargestellten ersten Ausführungsform der Erfindung ist am Bezug 11 des Polsterelements 10 im Bereich der Sollbruchstelle 15 ein erstes und ein zweites textiles Flächengebilde 16, 17 angebracht, wobei das erste textile Flächengebilde 16 an einer Stelle 16' an einer Seite der (im Aktivierungsfall des Airbags aufreißenden) Sollbruchstelle 15 und das zweite textile Flächengebilde 17 an einer Stelle 17' an der gegenüberliegenden Seite der (im Aktivierungsfall des Airbags aufreißenden) Sollbruchstelle 15 befestigt ist. Im Aktivierungsfall des Airbags ist durch diese Ausgestaltung gewährleistet, dass das Polsterelement 10 bzw. der Bezug 11 ich sicherer Weise die Entfaltung des Airbags erlaubt bzw. ermöglicht.

Gemäß der in Figur 3 dargestellten zweiten Ausführungsform der Erfindung ist ein drittes textiles Flächengebilde 18 in einem der Sollbruchstelle 15 gegenüberliegenden Bereich des Polsterelements 10 angeordnet, wobei das dritte textile Flächengebilde 18 zusammen mit der Einbringung des Füllmaterials 12 in das Polsterelement 10 geformt bzw. mit dem Polsterelement 10 verbunden wird. Das dritte textile Flächengebilde 18 weist im direkt der Sollbruchstelle 15 gegenüberliegenden Bereich eine Öffnung bzw. einen Schlitz 18' auf, der bewirkt, dass mit einfachen Mitteln eine sichere und reproduzierbare Öffnung der Sollbruchstelle und damit Entfaltung des Airbags möglich ist.

### Bezugszeichenliste

- 1: Werkzeug
- 10: Polsterelement
- 11: Bezug
- 12: Füllmaterial / Schaumstoffmaterial
- 12': Pfeile
- 15: Sollbruchstelle / Naht
- 16: erstes textiles Flächengebilde
- 16': Befestigungsstelle
- 17: zweites textiles Flächengebilde
- 17': Befestigungsstelle
- 18: drittes textiles Flächengebilde
- 18': Schlitz

## Patentansprüche

1. Polsterelement (10) mit einem Bezug (11), einem Füllmaterial (12) und mit wenigstens einem zusätzlich zum Bezug (11) eingeschäumten textilen Flächengebilde (16, 17, 18), wobei bei Aktivierung einer aufblasbaren Insassenschutzvorrichtung zuverlässig und reproduzierbar eine Öffnung des Bezugs (11) erfolgt, wobei das wenigstens eine textile Flächengebilde (16, 17, 18) vorgesehen ist, bei Aktivierung der aufblasbaren Insassenschutzvorrichtung die Öffnung des Bezugs (11) zu beeinflussen, wobei die Außenseite des Polsterelements (10) eine A-Seite (Sichtseite) und eine B-Seite (Nichtsichtseite) aufweist, wobei bei Aktivierung der aufblasbaren Insassenschutzvorrichtung die Öffnung des Bezugs (11) von der B-Seite des Polsterelements (10) aus erfolgt, **gekennzeichnet dadurch, daß** das wenigstens eine textile Flächengebilde (16, 17, 18) an einer Verbindungsstelle mit dem Bezug (11) verbunden ist, wobei die Verbindungsstelle der Innenseite des Bezugs (11) an der A-Seite des Polsterelements (10) entspricht.

2. Polsterelement (10) nach Anspruch 1, **dadurch gekennzeichnet, dass** das wenigstens eine textile Flächengebilde (16, 17, 18) an einer Verbindungsstelle mit dem Bezug (11) verbunden ist, wobei die Verbindungsstelle der Innenseite des Bezugs (11) an der B-Seite des Polsterelements (10) entspricht.

3. Polsterelement (10) nach einem der Ansprüche 1 oder 2, **dadurch gekennzeichnet, dass** das wenigstens eine textile Flächengebilde (16, 17, 18) auf der B-Seite des Polsterelements (10) sich durch den Bezug (11) hindurch ersteckt.

4. System aus einem Polsterelement (10) nach einem der Ansprüche 1 bis 3 und einer aufblasbaren Insassenschutzvorrichtung, wobei das Polsterelement (10) einen Bezug (11), einen Füllmaterial (12) und wenigstens ein zusätzlich zum Bezug (11) eingeschäumtes textiles Flächengebilde (16, 17, 18) aufweist, wobei bei Aktivierung der aufblasbaren Insassenschutzvorrichtung zuverlässig und reproduzierbar eine Öffnung des Bezugs (11) erfolgt, wobei das wenigstens eine textile Flächengebilde (16, 17, 18) vorgesehen ist, bei Aktivierung der aufblasbaren Insassenschutzvorrichtung die Öffnung des Bezugs (11) zu beeinflussen, wobei das Polsterelement eine Naht (15) aufweist, wobei die aufblasbare Insassenschutzvorrichtung einen Luftsack aufweist, welcher derart konfiguriert ist, dass der Luftsack zum Schutz von Fahrzeuginsassen bei Aktivierung der aufblasbaren Insassenschutzvorrichtung aus der Naht (15) des Polsterelements austritt.

## Claims

1. Cushioning element (10) comprising a cover (11), a filling material (12) and at least one textile sheet (16, 17, 18) that is foam-encapsulated in addition to the cover (11), opening of the cover (11) taking place reliably and reproducibly when an inflatable occupant protection device is activated, the at least one textile sheet (16, 17, 18) being intended to influence the opening of the cover (11) when the inflatable occupant protection device is activated the outer side of the cushioning element (10) having an A side (visible side) and a B side (non-visible side), the opening of the cover (11) taking place from the B side of the cushioning element (10) when the inflatable occupant protection device is activated, **characterized in that** the at least one textile sheet (16, 17, 18) is joined to the cover (11) at a join, the join corresponding to the inner side of the cover (11) on the A side of the cushioning element (10).

2. Cushioning element (10) according to Claim 1, **characterized in that** the at least one textile sheet (16, 17, 18) is joined to the cover (11) at a join, the join corresponding to the inner side of the cover (11) on the B side of the cushioning element (10).

3. Cushioning element (10) according to either of Claims 1 and 2, **characterized in that** the at least one textile sheet (16, 17, 18) extends through the cover (11) on the B side of the cushioning element (10).

4. System made up of a cushioning element (10) according to one of Claims 1 to 3 and an inflatable occupant protection device, the cushioning element (10) having a cover (11), a filling material (12) and at least one textile sheet (16, 17, 18) that is foam-encapsulated in addition to the cover (11), and opening of the cover (11) taking place reliably and reproducibly when the inflatable occupant protection device is activated, the at least one textile sheet (16, 17, 18) being intended to influence the opening of the cover (11) when the inflatable occupant protection device is activated, the cushioning element having a seam (15), the inflatable occupant protection device having an airbag which is designed in such a way that the airbag emerges from the seam (15) of the cushioning element to protect vehicle occupants when the inflatable occupant protection device is activated.

## Revendications

1. Élément de rembourrage (10) comprenant une enveloppe (11), un matériau de remplissage (12) et au moins une structure plane textile (16, 17, 18) couverte de mousse en plus de l'enveloppe (11), une ouverture de l'enveloppe (11) s'effectuant de manière fiable et reproductible lors de l'activation d'un dispositif gonflable de protection des occupants, l'au moins une structure plane textile (16, 17, 18) étant prévue pour, lors de l'activation du dispositif gonflable de protection des occupants, influer sur l'ouverture de l'enveloppe (11), le côté extérieur de l'élément de rembourrage (10) comprenant un côté A (côté visible) et un côté B (côté non visible), l'ouverture de l'enveloppe (11) s'effectuant à partir du côté B de l'élément de rembourrage (10) lors de l'activation du dispositif gonflable de protection des occupants, **caractérisé en ce qu'**au moins une structure plane textile (16, 17, 18) est reliée à l'enveloppe (11) en un point de liaison, le point de liaison correspondant au côté intérieur de l'enveloppe (11) au niveau du côté A de l'élément de rembourrage (10).

2. Élément de rembourrage (10) selon la revendication 1, **caractérisé en ce que** l'au moins une structure plane textile (16, 17, 18) est reliée à l'enveloppe (11) en un point de liaison, le point de liaison correspondant au côté intérieur de l'enveloppe (11) au niveau du côté B de l'élément de rembourrage (10).

3. Élément de rembourrage (10) selon la revendication 1 ou 2, **caractérisé en ce que** l'au moins une structure plane textile (16, 17, 18) s'étend à travers l'enveloppe (11) sur le côté B de l'élément de rembourrage (10).

4. Système constitué d'un élément de rembourrage (10) selon l'une quelconque des revendications 1 à 3 et d'un dispositif gonflable de protection des occupants, l'élément de rembourrage (10) comprenant une enveloppe (11), un matériau de remplissage (12) et au moins une structure plane textile (16, 17, 18) couverte de mousse en plus de l'enveloppe (11), une ouverture de l'enveloppe (11) s'effectuant de manière fiable et reproductible lors de l'activation du dispositif gonflable de protection des occupants, l'au moins une structure plane textile (16, 17, 18) étant prévue pour, lors de l'activation du dispositif gonflable de protection des occupants, influer sur l'ouverture de l'enveloppe (11), l'élément de rembourrage comprenant un joint (15), le dispositif gonflable de protection des occupants comprenant un coussin d'air qui est configuré de telle sorte que le coussin d'air sorte hors du joint (15) de l'élément de rembourrage lors de l'activation du dispositif gonflable de protection des occupants, en vue de la protection d'occupants du véhicule.
